# EUROPEAN PATENT APPLICATION

(11) **EP 1 850 223 A2**
(43) Date of publication of application: **31.10.2007**
(21) Application number: 07251731.1
(22) Date of filing: 24.04.2007
(51) Int. Cl.: G06F 3/12

(54) **Print system**

(30) Priority: 24.04.2006 JP 2006119856; 03.04.2007 JP 2007097772
(71) Applicant: Ricoh Company, Ltd., Tokyo 143-8555 (JP)
(72) Inventor: Yamamoto, Yohei, Tokyo (JP)
(74) Representative: Leeming, John Gerard

(57) **Abstract**

A print system in which one or more printers (1) are connected to a print server (2) through a network is disclosed, including: a part acquiring printer information indicating a state of the printer (1) from each of the one or more printers (1) at an appropriate timing; a part generating and distributing metadata including biographical information of a document subject to be printed out at the printer (1) and data storage location information from the print server (2); and a part generating and distributing applicable print data based on the print information corresponding to the printer (1) which sent a request when the request is received based on the metadata from the printer (1) to acquire the applicable print data of the document subject to be printed out.

## Description

The present invention generally relates to a print system which sends print data applicable to a state of a printer, so that an appropriate print is performed.

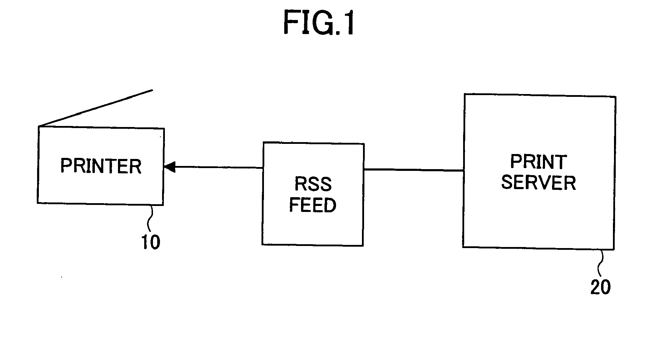

FIG. 1 is a diagram showing a push print of a conventional subscribe-publish type. For example, this conventional push print provides print data by using an RSS (Rich Site Summary) feed used in a Web technology.

In FIG. 1, a printer 10 is set to subscribe a specific RSS feed. The printer 10 periodically acquires the RSS feed from a print server 20, and prints out the print data of text information and image information by acquiring the print data from the print server 20 based on the URL (Uniform Resource Locator) included in an RSS.

FIG. 2 is a diagram showing an example of the RSS. The RSS includes descriptions D1 and D2 for respective articles enclosed by item tags, and includes descriptions D3 and D4 in enclosure tags included in the descriptions D1 and D2 indicate URLs of the print data.

FIG. 3 is a sequence diagram showing a process example from acquiring the RSS to printing out the print data.

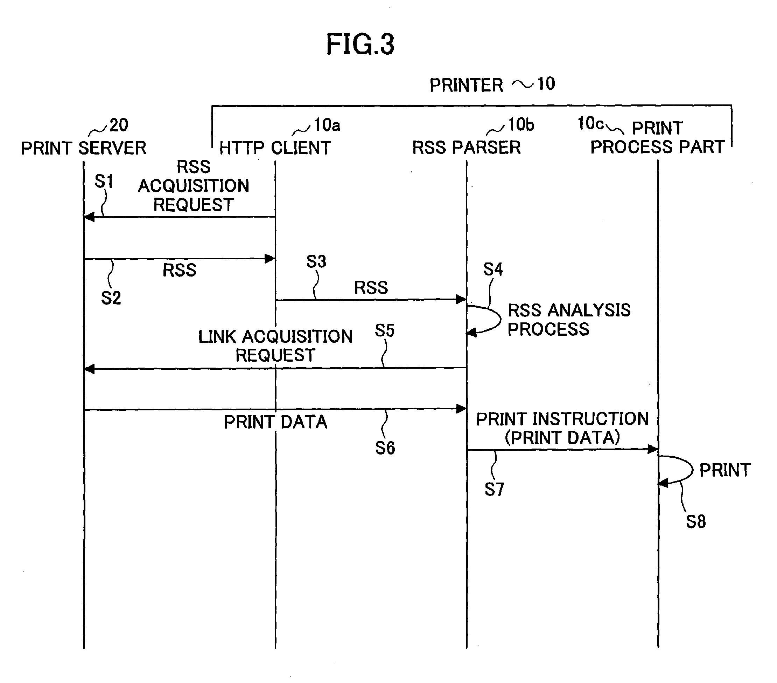

In FIG. 3, when an RSS acquisition request is conducted from an HTTP (Hyper-Text Transfer Protocol) client 10a of the printer 10 to the print server 20 (step S1), the RSS is sent to the printer 10 (step S2). The HTTP client 10a sends the RSS to an RSS parser 10b (step S3). The RSS parser 10b analyzes the RSS, and acquires the URL of the print data from the enclosure tag (step S4).

After that, the RSS parser 10b sends a link acquisition request to the print server 20 (step S5), and acquires the print data (step S6). The RSS parser 10b sends a print instruction by sending the print data to a print process part 10c (step S7), and prints out the print data (step S8).

As described above, the conventional print system realizes a Web base system by using the RSS of the Web technology. However, the following problems are raised.

That is, there are problems in that due to a basic specification and available options of the printer 10, a paper size of papers filled in a tray, and a like, the number of available colors (color, or black and while), a resolution, a printer language, an available print range, a paper type, and a like are insufficient or different, the print data provided from the print server 20 cannot be printed out (for example, sheets of an A3 size are not filled in a case of the print data of the A3 size), expected print quality cannot be realized (for example, a color print is not available in a case of color print data), and a like.

It is noted that an acceptable media type and a like can be described in an Accept header of the HTTP but it is not ruled to include a print condition. In this case, it is possible to uniquely extend the Accept header of the HTTP to include the print condition. Since it is not a standard technology, it is disadvantageous for system architecture.

The present invention solves or reduces one or more of the above problems.

According to one aspect of the present invention, there is provided a print system in which one or more printers are connected to a print server through a network, including: a part acquiring printer information indicating a state of the printer from each of the one or more printers at an appropriate timing; a part generating and distributing metadata including biographical information of a document subject to be printed out at the printer and data storage location information from the print server; and a part generating and distributing applicable print data based on the print information corresponding to the printer which sent a request when the request is received based on the metadata from the printer to acquire the applicable print data of the document subject to be printed out.

According to the present invention, it is possible to supply printer data applicable for the state of the printer, so that the printer can preferably print out the print data.

In the following, embodiments of the present invention will be described with reference to the accompanying drawings, in which:
FIG. 1 is a diagram showing a push print of a conventional subscribe-publish type;

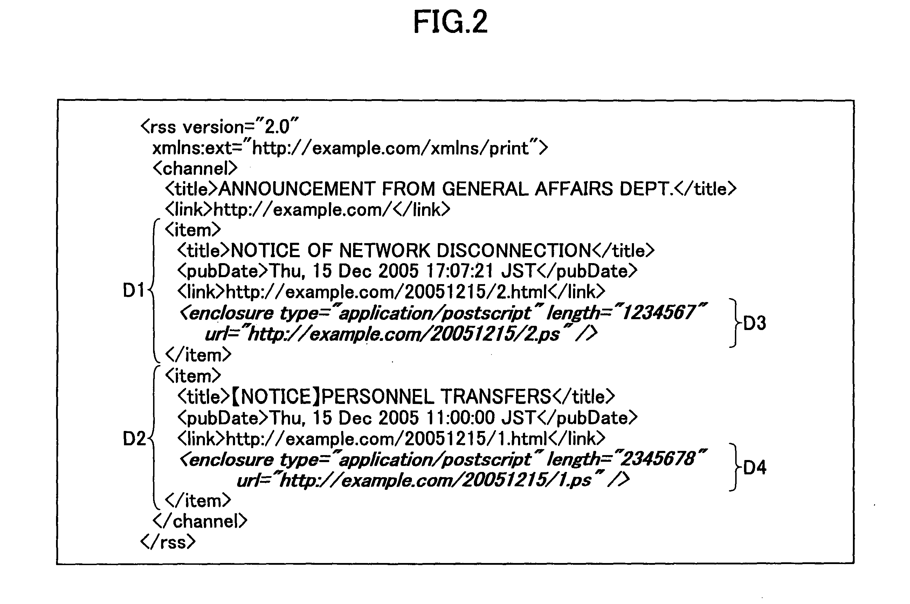

FIG. 2 is a diagram showing an example of the RSS;
FIG. 3 is a sequence diagram showing a process example from acquiring the RSS to printing out print data;

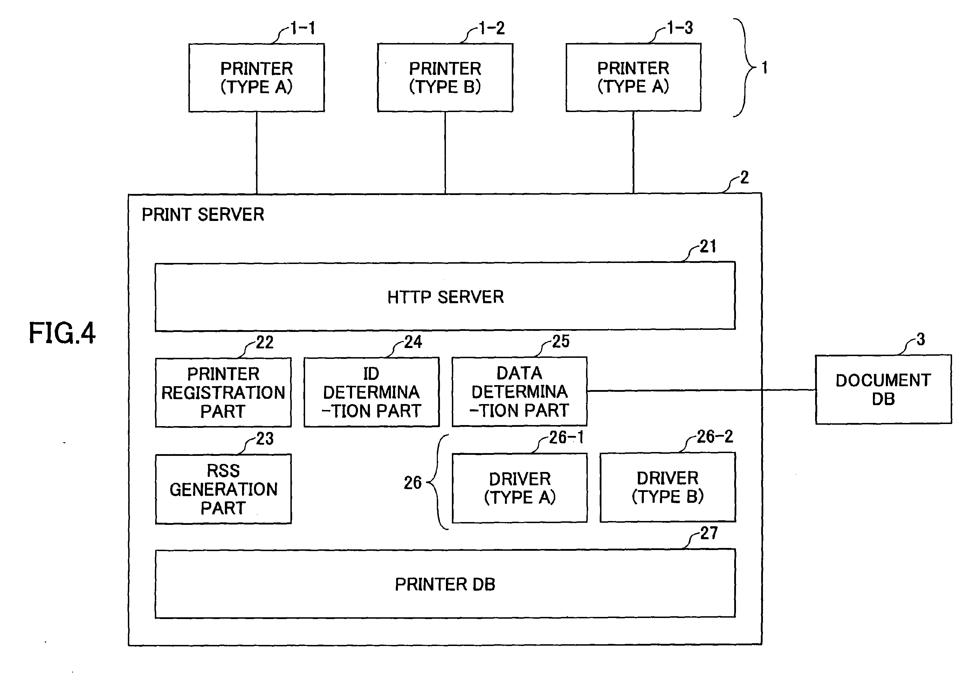

FIG. 4 is a block diagram showing a configuration of a print system according to a first embodiment of the present invention;

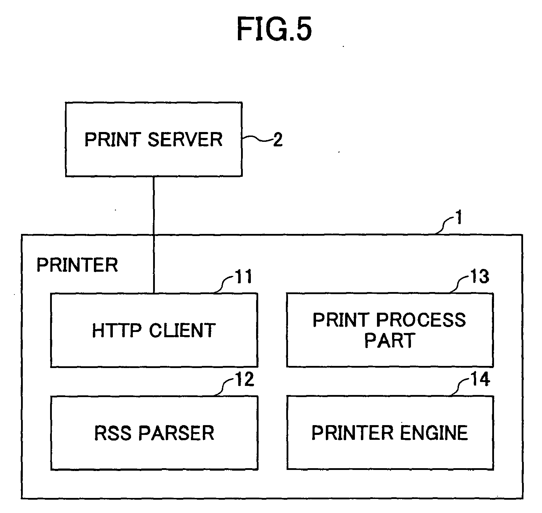

FIG. 5 is a block diagram showing an internal configuration of a printer according to the first embodiment of the present invention;

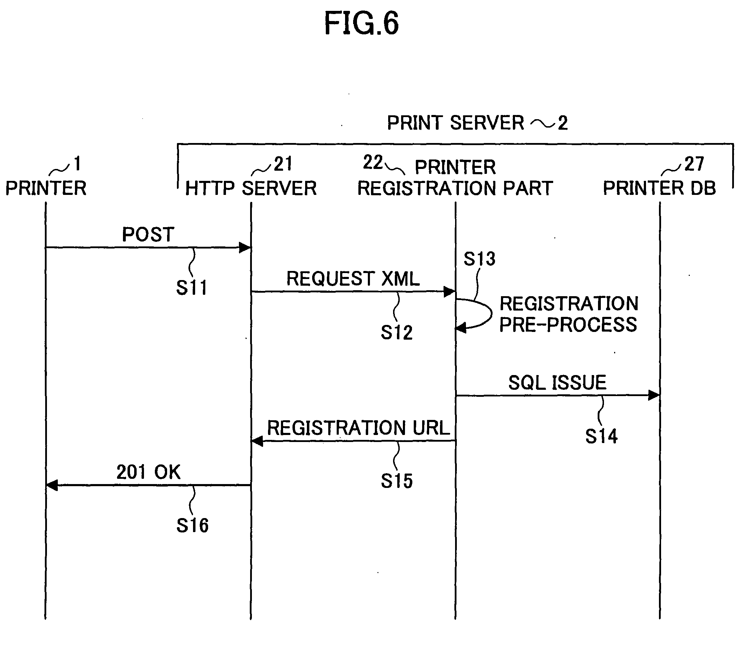

FIG. 6 is a sequence diagram showing a process of a print registration according to the first embodiment of the present invention;

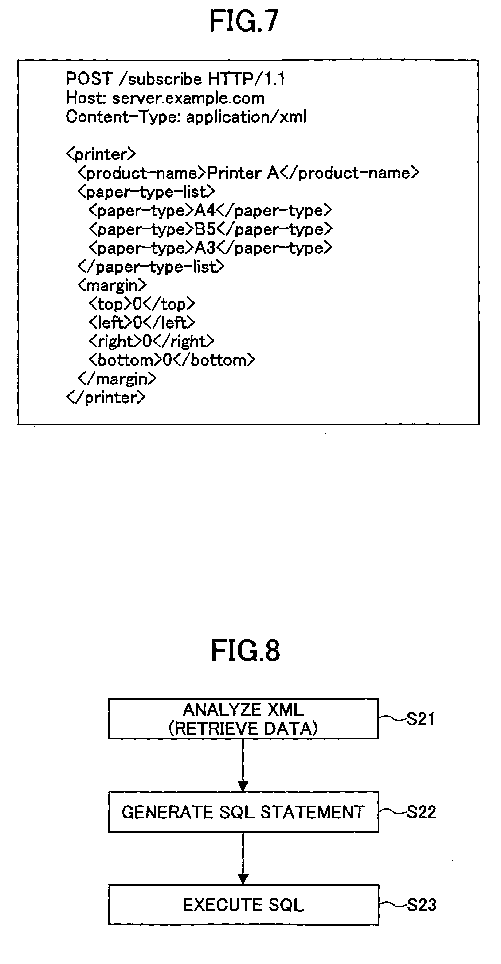

FIG. 7 is a diagram showing data including printer information posted from the printer according to the first embodiment of the present invention;
FIG. 8 is a flowchart for explaining a registration pre-process according to the first embodiment of the present invention;

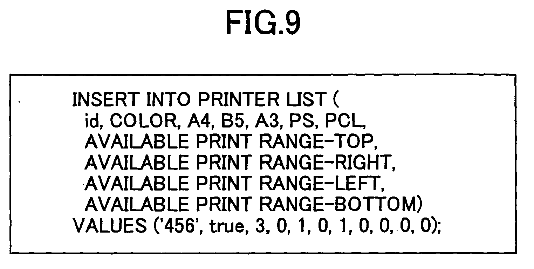

FIG. 9 is a diagram showing an SQL statement generated in the registration pre-process according to the first embodiment of the present invention;

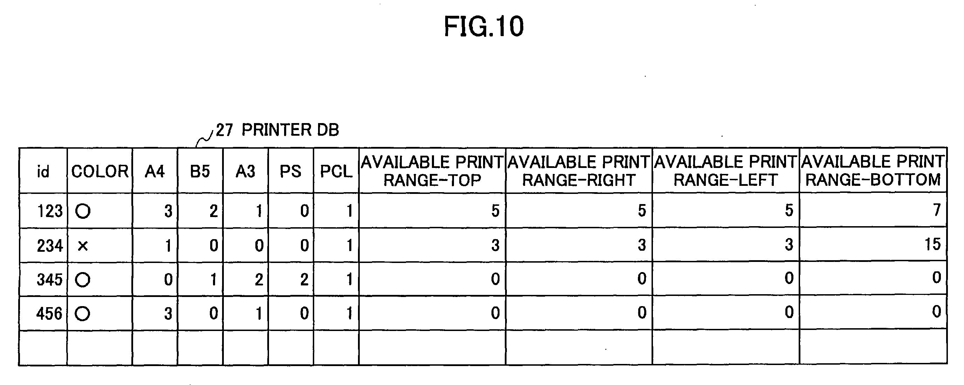

FIG. 10 is a diagram showing a configuration of a printer DB according to the first embodiment of the present invention;

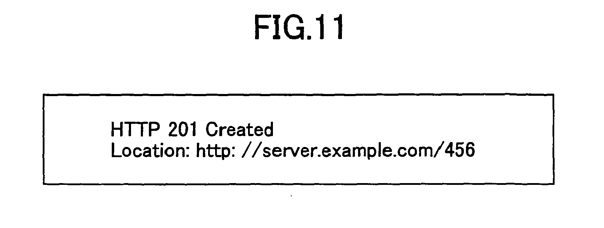

FIG. 11 is a diagram showing an HTTP response returned from the printer according to the first embodiment of the present invention;

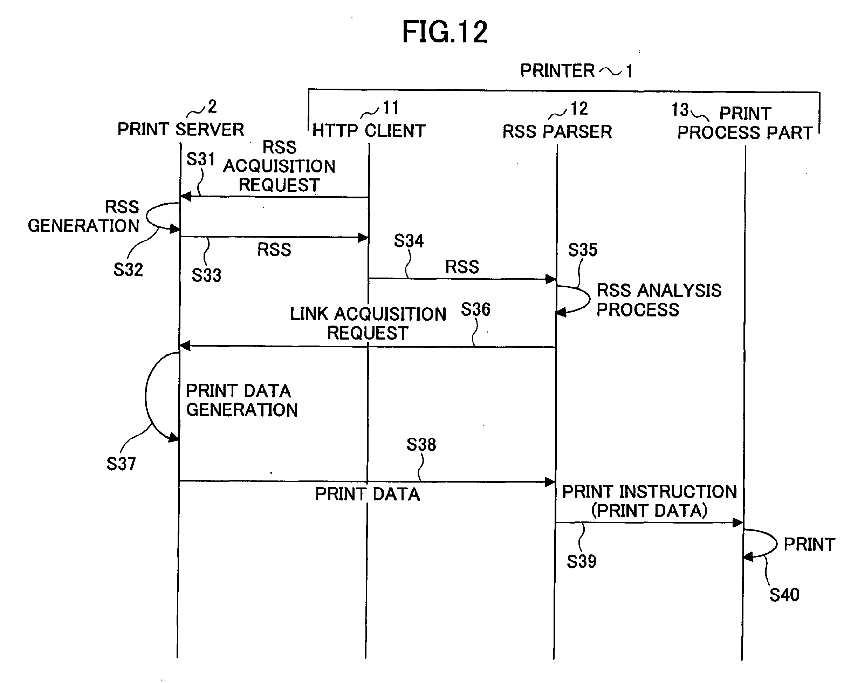

FIG. 12 is a sequence diagram showing a process from acquiring an RSS to printing out print data, according to the first embodiment of the present invention;

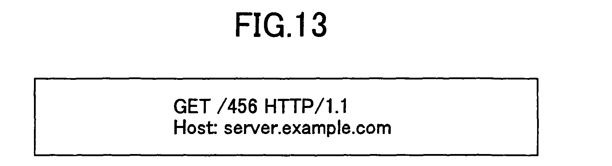

FIG. 13 is a diagram showing an RSS acquisition request by an HTTP request, according to the first embodiment of the present invention;

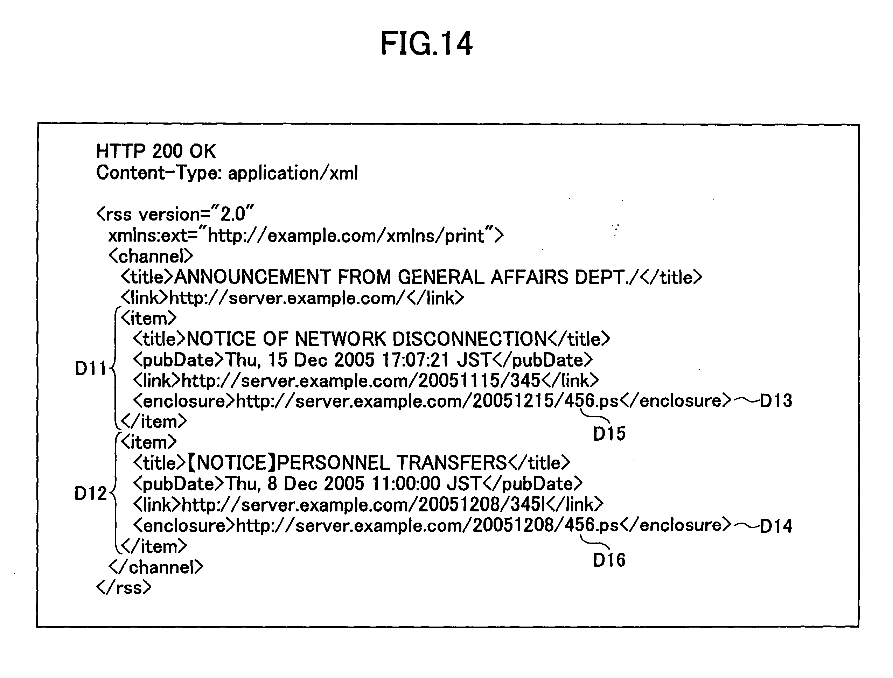

FIG. 14 is a diagram showing the RSS to be generated, according to the first embodiment of the present invention;

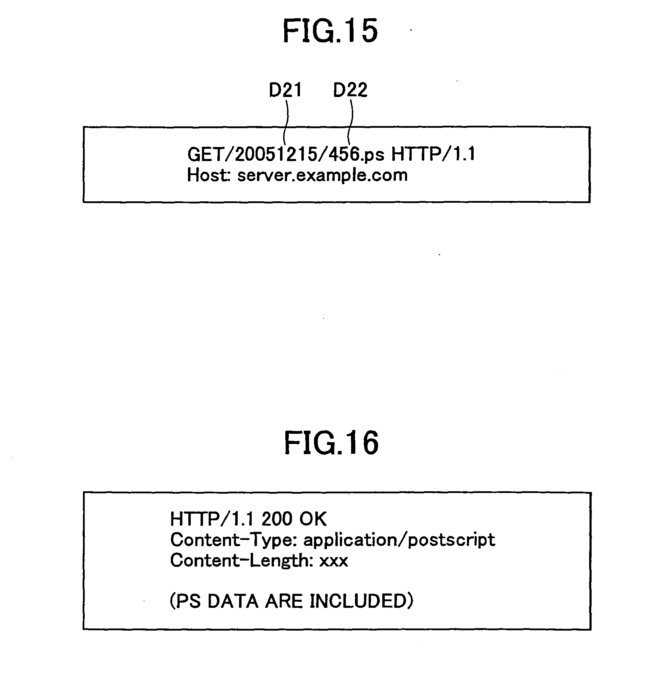

FIG. 15 is a diagram showing a link acquisition request by the HTTP request, according to the first embodiment of the present invention;
FIG. 16 is a diagram showing the print data according to the first embodiment of the present invention;

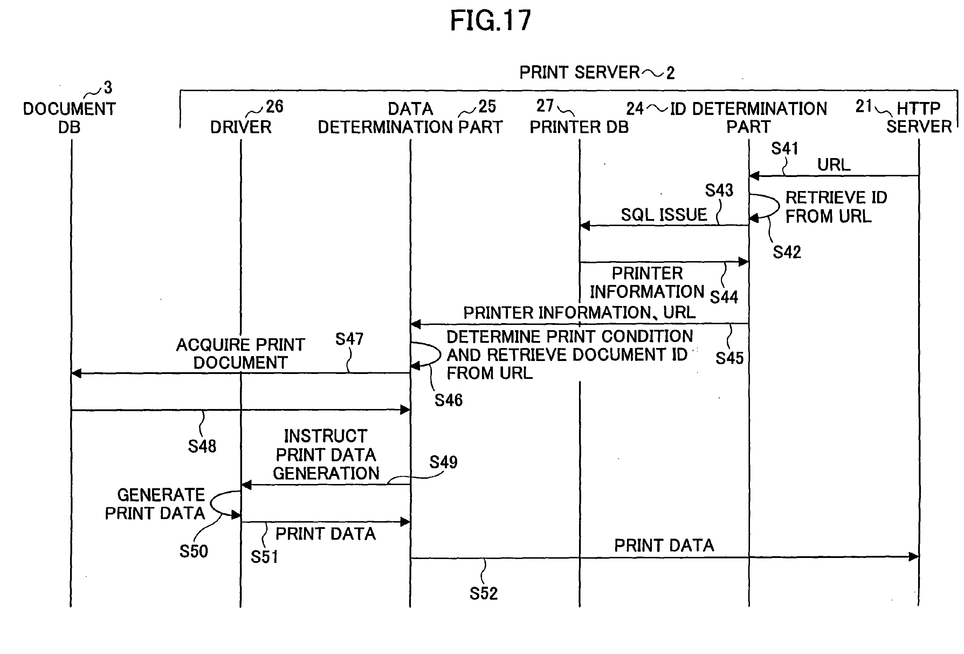

FIG. 17 is a sequence diagram showing a process of generating the print data conducted in the step S37 in FIG. 12, according to the first embodiment of the present invention;

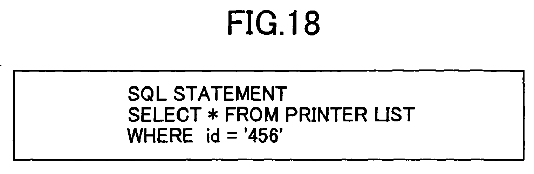

FIG. 18 is a diagram showing an SQL statement generated by an ID determination part according to the first embodiment of the present invention;

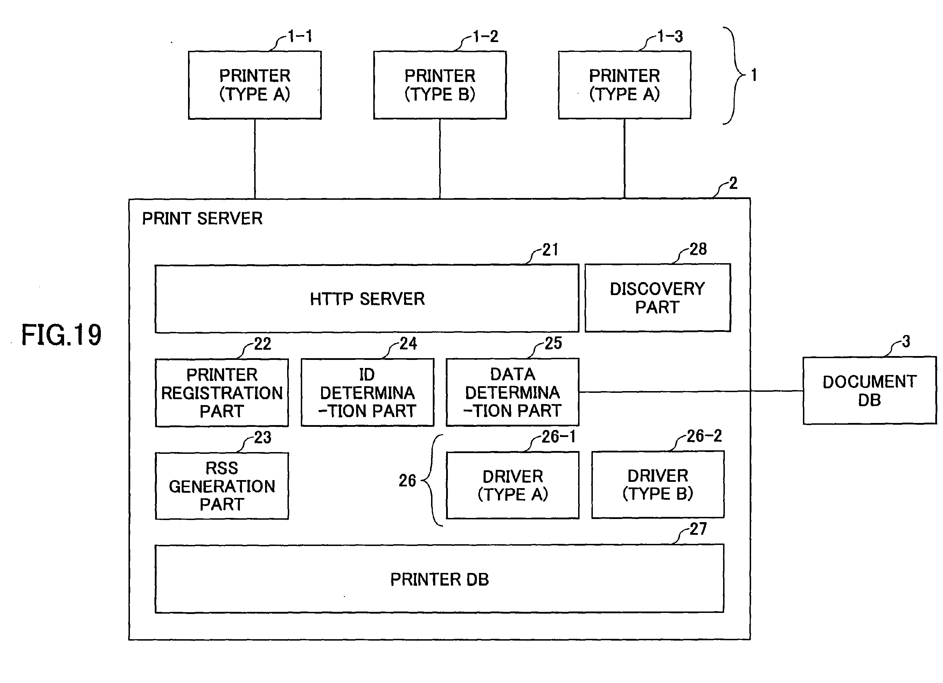

FIG. 19 is a diagram showing a configuration of a print system according to a second embodiment of the present invention;

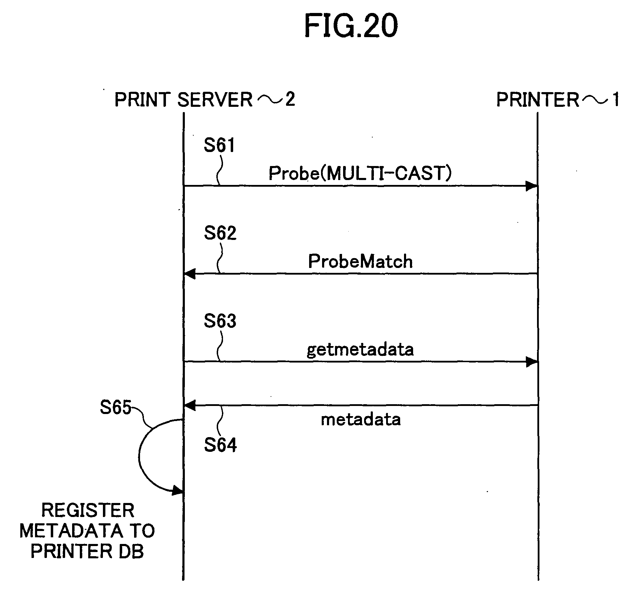

FIG. 20 is a sequence diagram showing a process of a printer registration by a discovery function according to the second embodiment of the present invention;

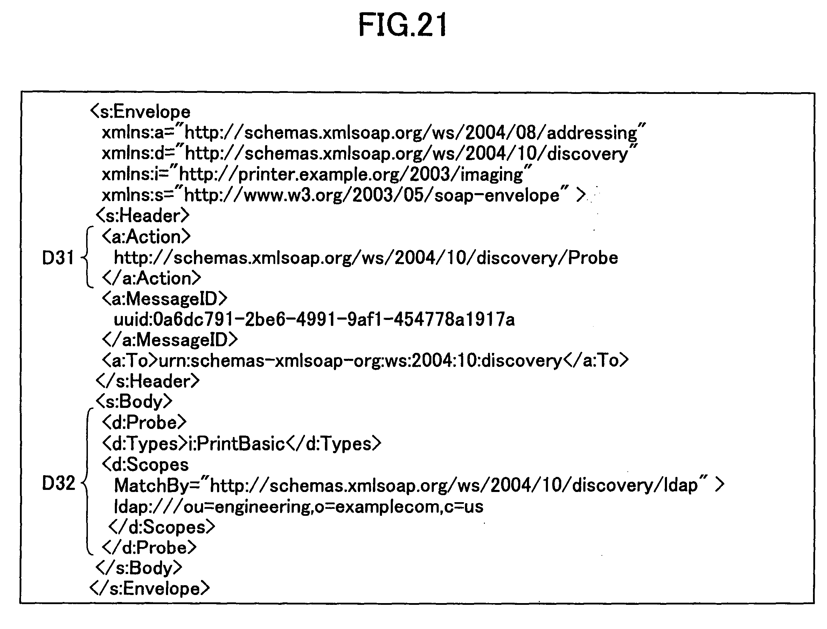

FIG. 21 is a diagram showing data for conducting a Probe for a discovery according to the second embodiment of the present invention;

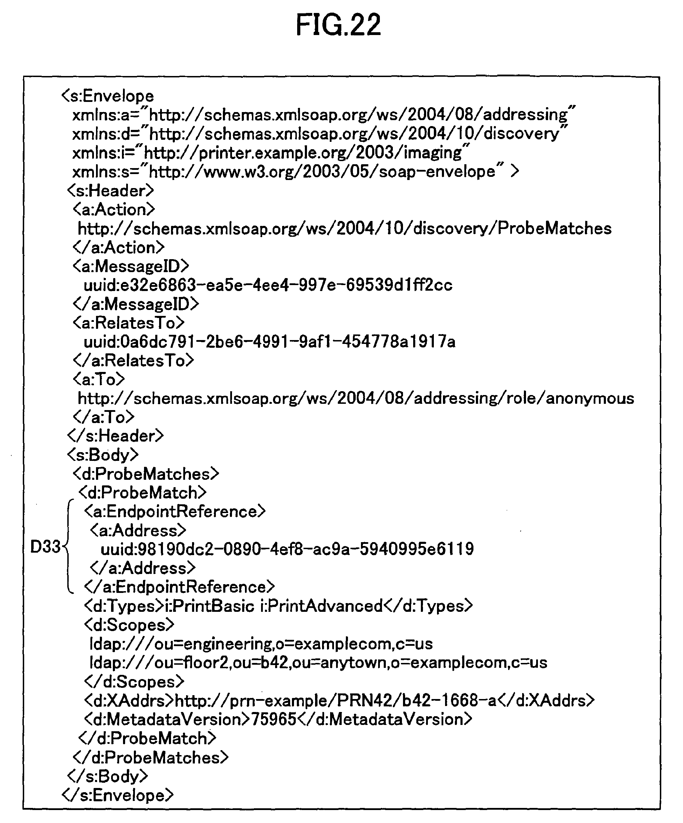

FIG. 22 is a diagram showing data indicating ProbeMatch, according to the second embodiment of the present invention;

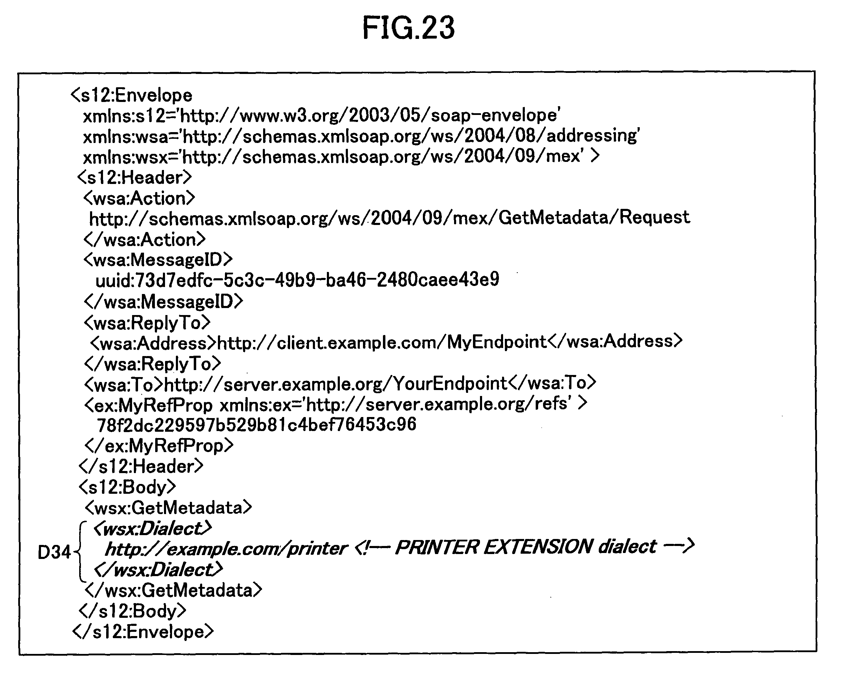

FIG. 23 is a diagram showing a metadata acquisition request according to the second embodiment of the present invention;

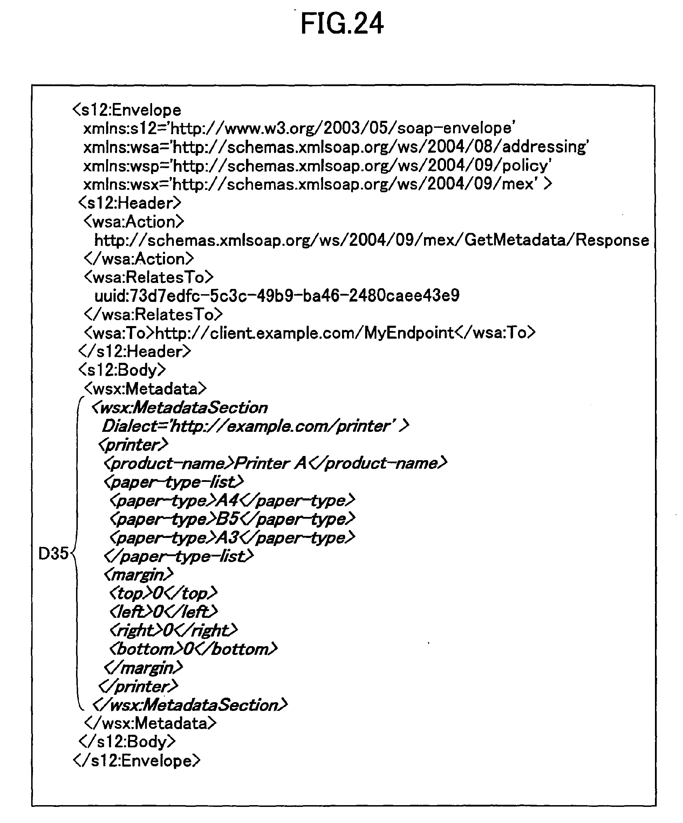

FIG. 24 is a diagram showing a metadata acquisition response according to the second embodiment of the present invention;

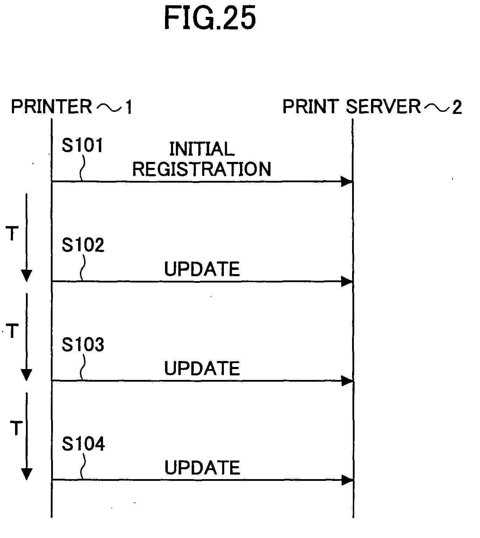

FIG. 25 is a sequence diagram showing a process in a case in that the printer periodically sends the print information, according to the third embodiment of the present invention;

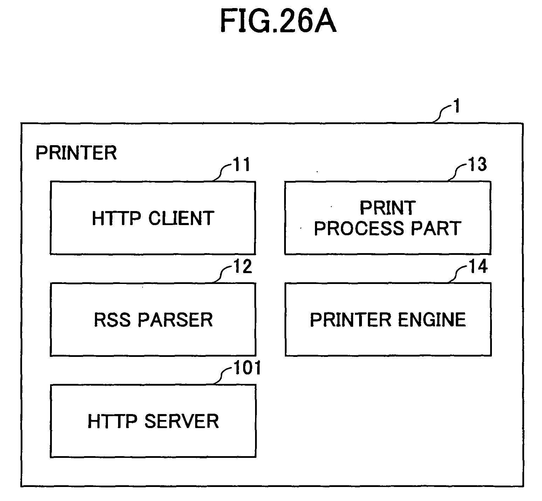

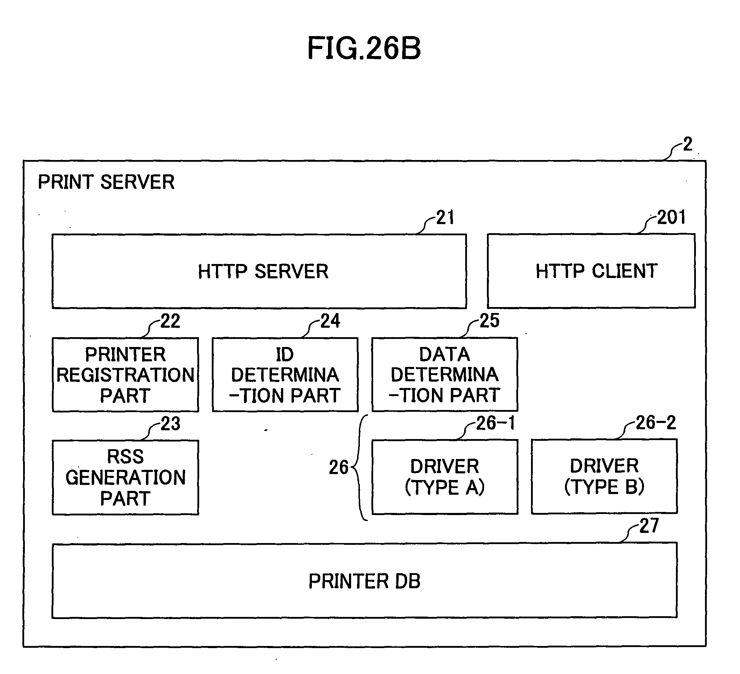

FIG. 26A is a diagram showing a configuration of a printer according to a fourth embodiment of the present invention and FIG. 26B is a diagram showing a configuration of a print server according to the fourth embodiment of the present invention;

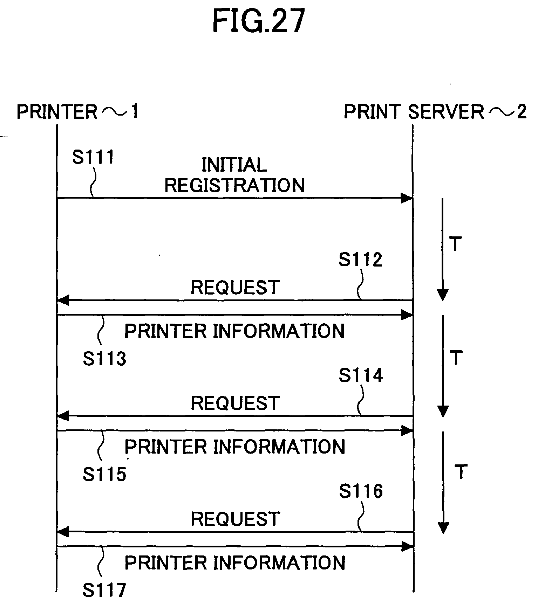

FIG. 27 is a sequence diagram showing a process in a case in that the print server periodically acquires the printer information according to the fourth embodiment of the present invention;

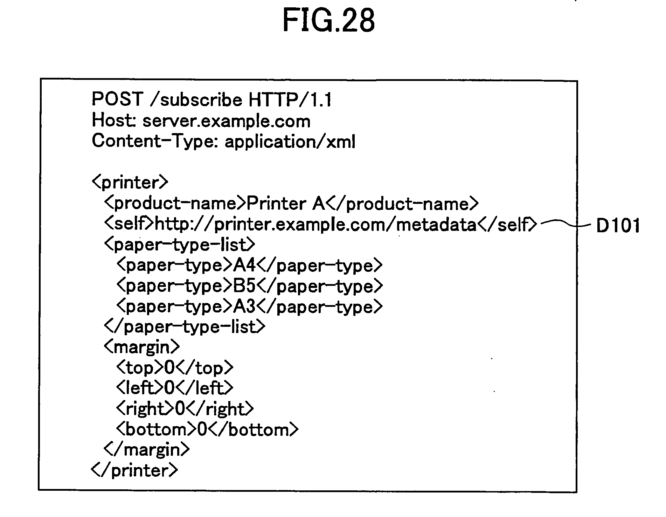

FIG. 28 is a diagram showing data posted from the printer to the print server, according to the fourth embodiment of the present invention;

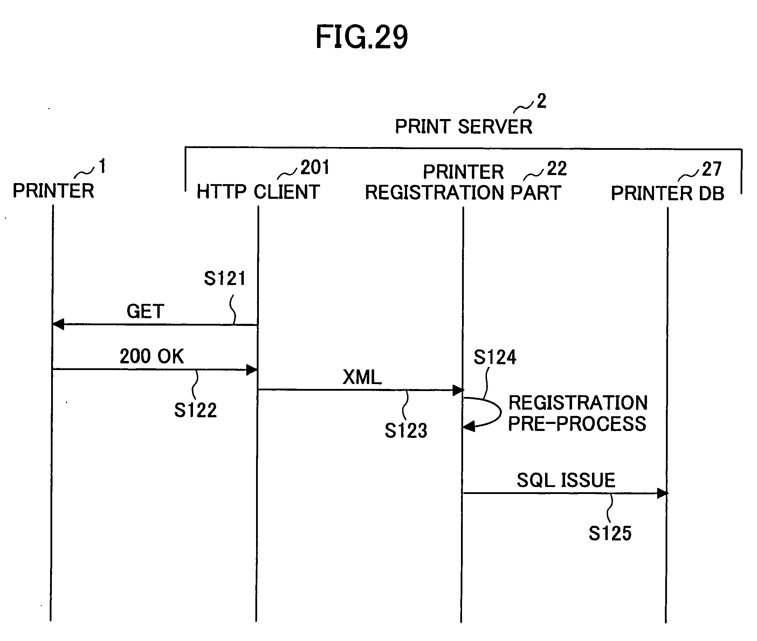

FIG. 29 is a sequence diagram showing a process of a printer information update in that the print server acquires the printer information from the printer in steps S112, S113,... shown in FIG. 27, according to the fourth embodiment of the present invention;

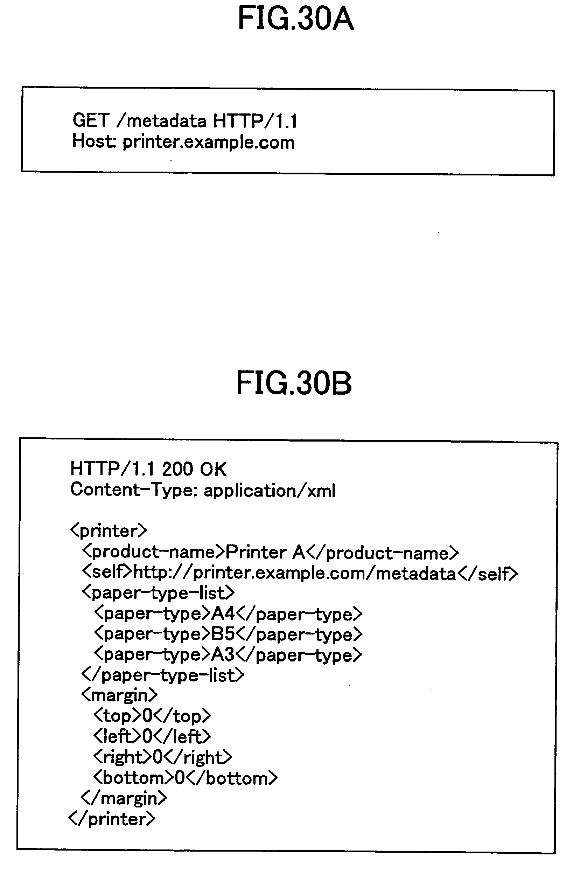

FIG. 30A is a diagram showing a request to the printer, according to the fourth embodiment of the present invention and FIG. 30B is a diagram showing a response from the printer, according to the fourth embodiment of the present invention;

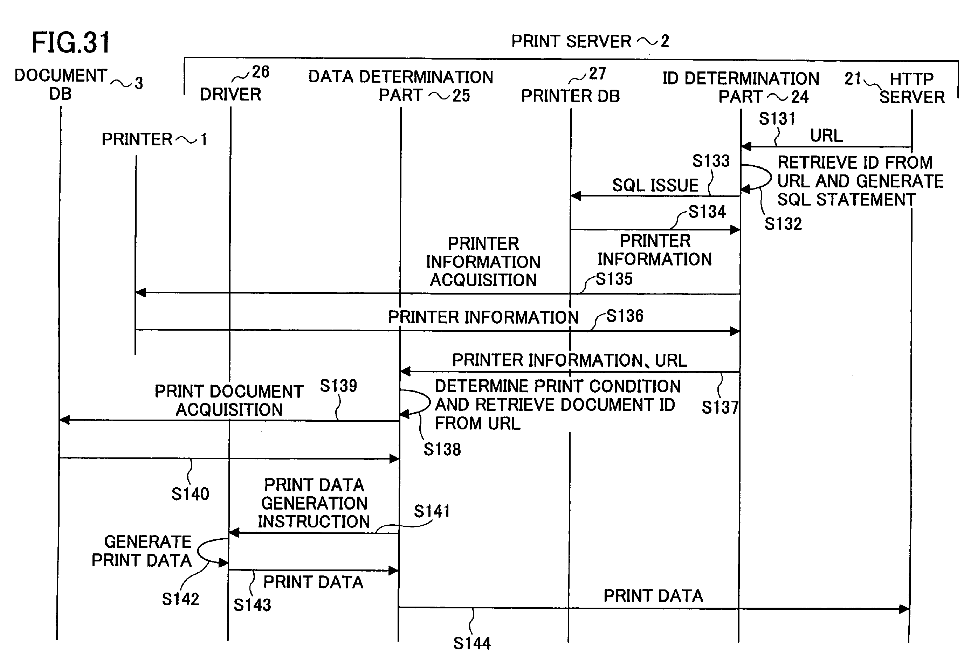

FIG. 31 is a sequence diagram showing a process in a case of acquiring the printer information on demand, according to the fifth embodiment of the present invention;

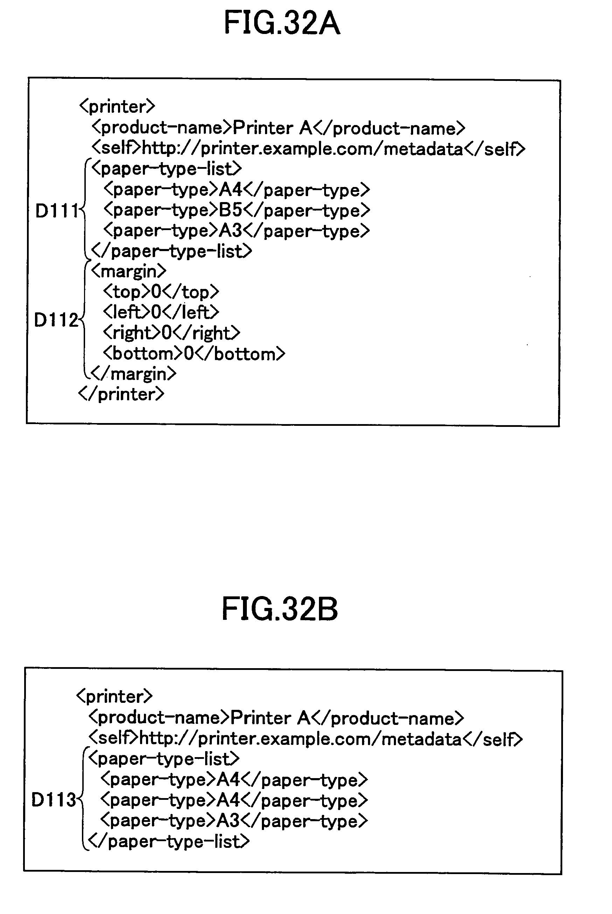

FIG. 32A and FIG. 32B are diagrams showing the printer information in a case in that a fix portion and a variable portion can be sent separately or both together, according to a sixth embodiment of the present invention;

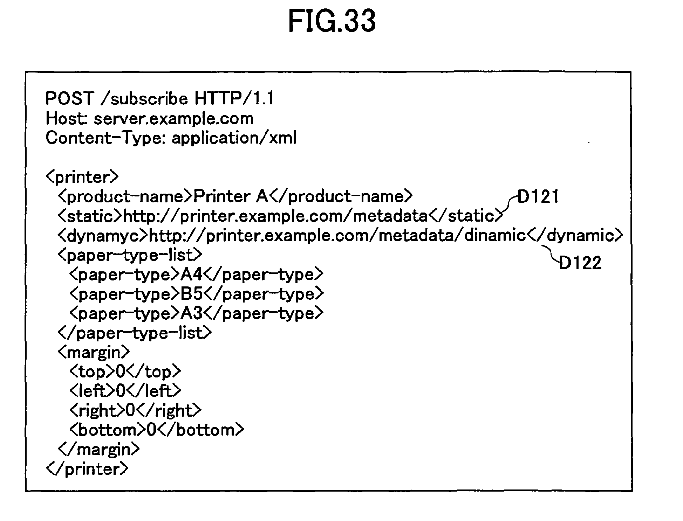

FIG. 33 is a diagram showing a request in a case of individually requesting the fix portion and the variable portion to correspond to the Pull type as shown in FIGS. 26A and 26B through FIGS. 30A and 30B and the on-demand type as shown in FIG. 31, according to the sixth embodiment of the present invention;

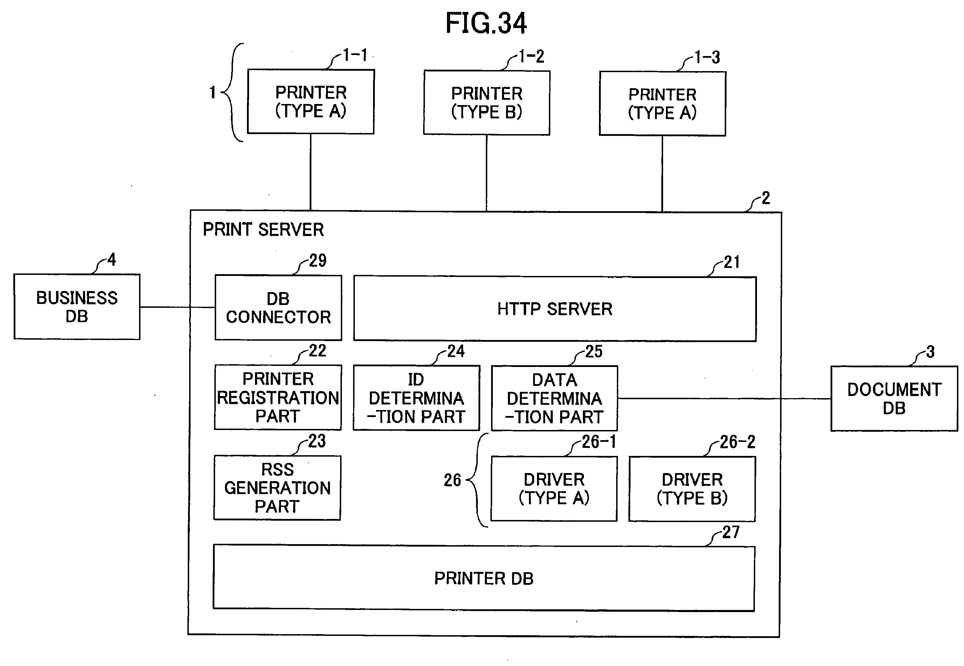

FIG. 34 is a diagram showing a configuration of a print system according to a seventh embodiment of the present invention;

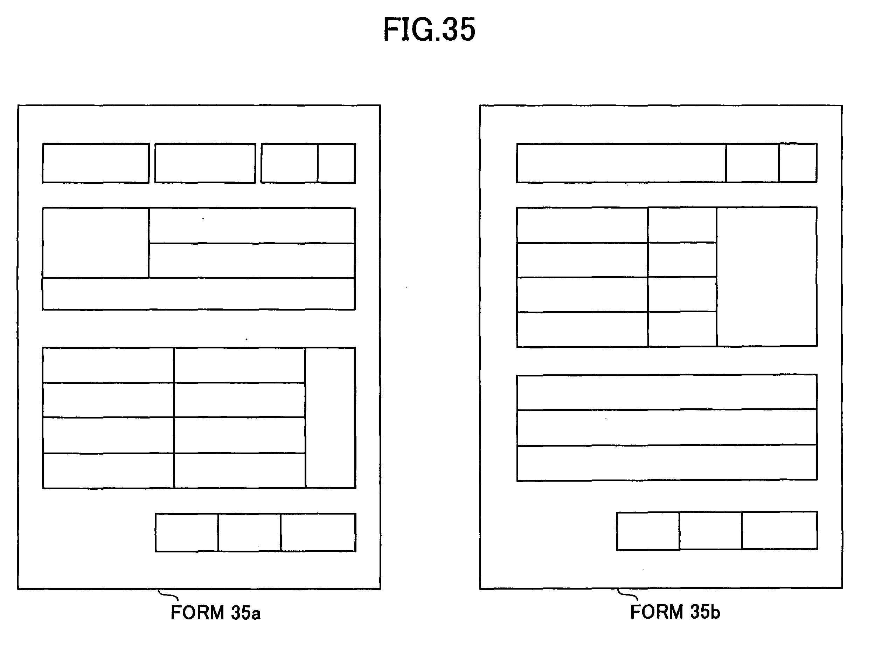

FIG. 35 is a diagram showing a few forms according to the seventh embodiment of the present invention;

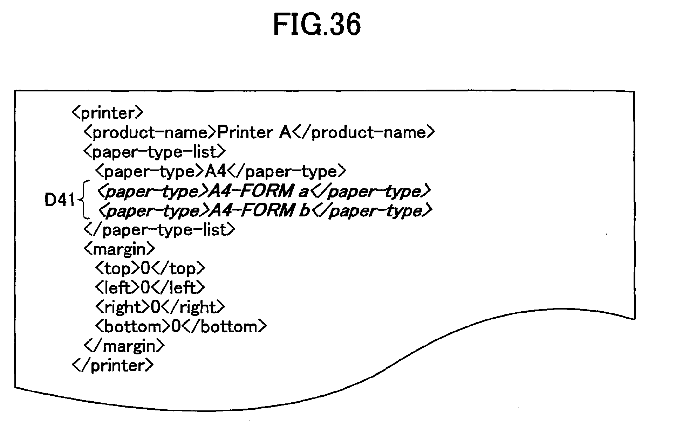

FIG. 36 is a diagram showing contents of the metadata to be registered to the print server according to the seventh embodiment of the present invention;

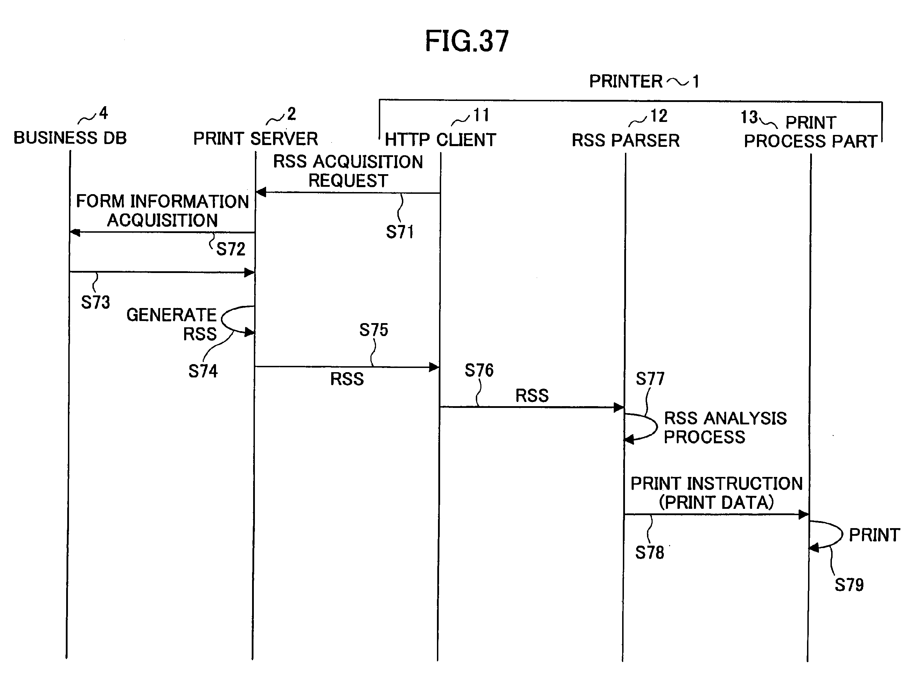

FIG. 37 is a sequence diagram showing a process from acquiring an RSS to printing out print data, according to the seventh embodiment of the present invention;

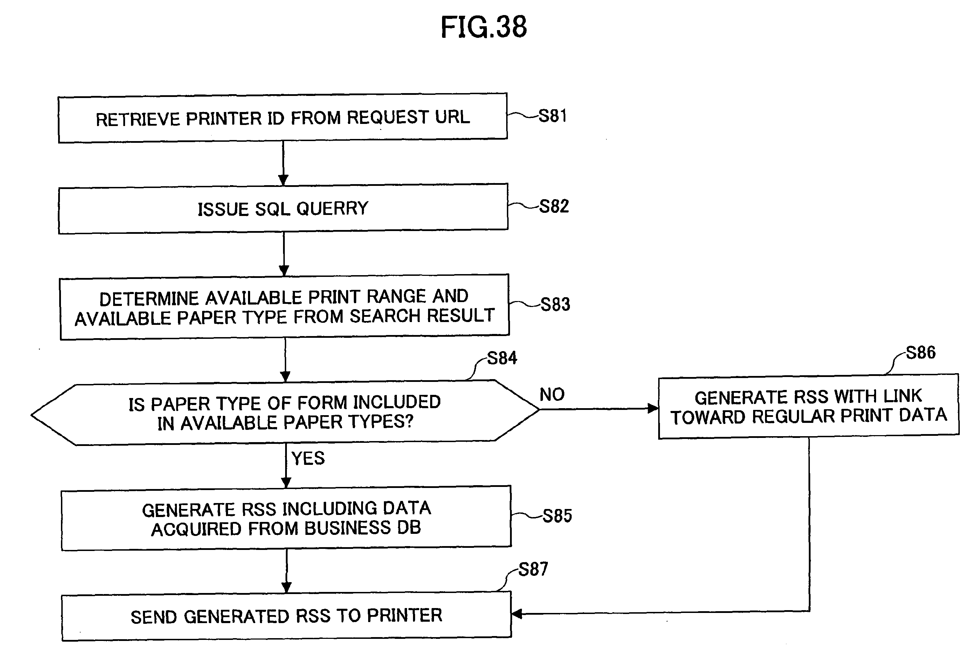

FIG. 38 is a flowchart for explaining a process for generating the RSS in the step S74 in FIG. 37, according to the seventh embodiment of the present invention; and

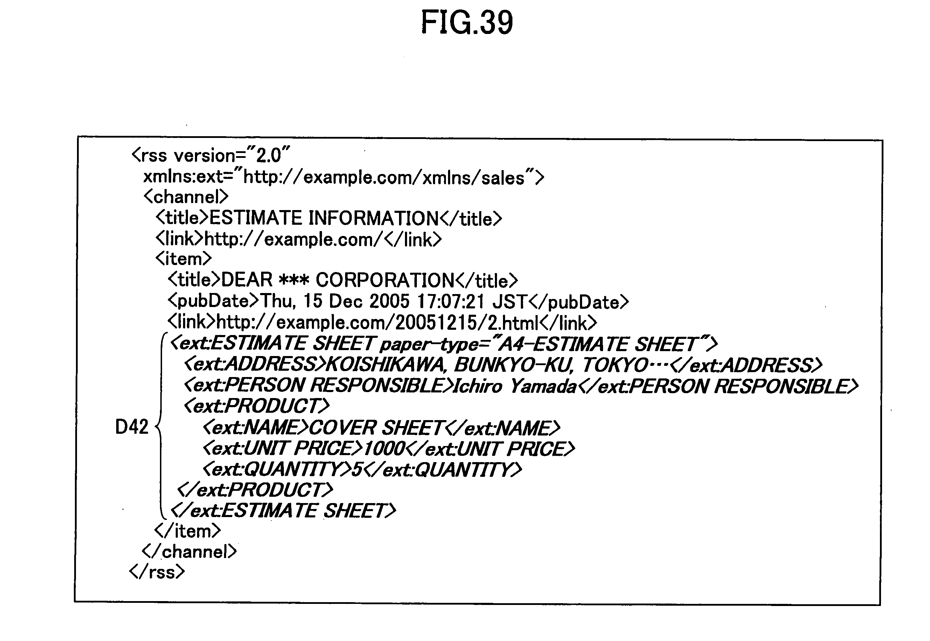

FIG. 39 is a diagram showing a generated RSS according to the seventh embodiment of the present invention.

In the following, embodiments of the present invention will be described with reference to the accompanying drawings.

### [First Embodiment]

FIG. 4 is a block diagram showing a configuration of a print system according to a first embodiment of the present invention.

In FIG. 4, for example, a printer 1-1 of a type A, a printer 1-2 of a type B, and a printer 1-3 of the type A are connected to a print server 2 through a network. In addition, the print server 2 is connected to a document DB 3 for storing document data. The number of printers is not limited to three as shown in FIG. 4, and any type can be applied to printers. Hereinafter, the printers 1-1 to 1-3 may be generically called printers 1.

The print server 2 includes an HTTP server 21 which receives an HTTP request from the printers 1 and returns an HTTP response, a printer registration part 22 which conducts a registration process of printer information (metadata) indicating each state of the printers 1, an RSS generation part 23 which generates the RSS to send the printers 1, an ID determination part 24 which acquires the printer information by determining an ID identifying a print service included in a request URL when the print data are requested from the printers 1, a data determination part 25 which determines a print condition from the print information to make the printers 1 generate the print data, drivers 26-1 and 26-2 which are provided corresponding to the types of the printers 1, and a printer DB 27 which stores the print information. It should be noted that the HTTP server 21, the printer registration part 22, the RSS generation part 23, the ID determination part 24, the data determination part 25, and the drivers 26-1 and 26-2 (hereinafter, generically called drivers 26) are realized by installing a computer program from an external recording medium or a like.

FIG. 5 is a block diagram showing an internal configuration of the printer 1 according to the first embodiment of the present invention. For example, the printer 1 includes an HTTP client 11 which sends the HTTP request to the print server 2 and receives the HTTP response from the print server 2, an RSS parser 12 which analyzes a received RSS, a print process part 13 which controls a print process, and a printer engine 14 including mechanism parts such as an imaging unit, a fixing unit, and a like. It should be noted that the HTTP client 11, the RSS parser 12, and the print process part 13 are realized by installing a computer program from an external recording medium, or a like.

FIG. 6 is a sequence diagram showing a process of a print registration according to the first embodiment of the present invention.

In FIG. 6, for example, when the printer 1 is activated, when the printer 1 is connected to the network, or when the state of the printer 1 changes, the printer information is posted from the printer 1 to the print server 2 in order to register the printer information (step S11). FIG. 7 is a diagram showing data including the printer information posted from the printer 1 according to the first embodiment of the present invention. For example, the data may be described in an XML (extensible Markup Language). The data includes a printer name by a product-name tag, a paper type by paper-type tags, a print range by a margin tag, and a like, as the print information. The print information is not limited to this example of the data.

Referring back to FIG. 6, the data posted from the printer 1 is received by the HTTP server 21 of the print server 2, the HTTP server 21 sends XML data included in the received data to the printer registration part 22 (step S12).

The printer registration part 22 conducts a registration pre-process with respect to the XML data (step S13). FIG. 8 is a flowchart for explaining the registration pre-process according to the first embodiment of the present invention. For example, first, in the registration pre-process, the XML data are analyzed and data to be registered are retrieved (step S21). Subsequently, an SQL (Structured Query Language) statement for registering to the printer DB 27 is generated (step S22), and the SQL statement is executed (step S23). FIG. 9 is a diagram showing the SQL statement generated in the registration pre-process according to the first embodiment of the present invention. For example, the SQL statement includes an instruction for registering information to a print list. The information indicates an ID (id) identifying a print service (printer), a color print available or not, an available paper size, a printer language, an available print range, and a like.

Referring back to FIG. 6, the printer registration part 22 issues an SQL to the printer DB 27 by executing the SQL statement (step S14), so that the printer information is registered in the printer DB 27. FIG. 10 is a diagram showing a configuration of the printer DB 27 according to the first embodiment of the present invention. For example, the printer DB 27 includes items of id, color, A4, B5, A3, PS, PCL, available print range-top, available print range-right, available print range-left, available print range-bottom, and a like.

Referring back to FIG. 6, subsequently, the printer registration part 22 sends an access URL including the ID being registered in the printer DB 27 to the HTTP server 21 (step S15) , and the HTTP server 21 returns an HTTP response to the printer 1 (step S16). FIG. 11 is a diagram showing the HTTP response returned from the printer 1 according to the first embodiment of the present invention. For example, the HTTP response includes an ID "456" in an URL of Location of data being newly registered.

FIG. 12 is a sequence diagram showing a process from acquiring the RSS to printing out the print data, according to the first embodiment of the present invention.

In FIG. 12, for example, the HTTP client 11 of the printer 1 sends an RSS acquisition request to the print server 2 based on a periodical or explicit instruction (step S31). FIG. 13 is a diagram showing the RSS acquisition request by the HTTP request, according to the first embodiment of the present invention.

Referring back to FIG. 12, the print server 2 generates the RSS by the RSS generation part 23 with respect to a document (article) subject to be printed out (step S32), and sends the generated RSS to the printer 1 (step S33). FIG. 14 is a diagram showing the RSS to be generated, according to the first embodiment of the present invention. For example, the RSS includes descriptions D11 and D12 enclosed by item tags for respective articles. URLs of print data are indicated in respective descriptions D13 and D14 enclosed by enclosure tags within the descriptions D11 and D12. In these URLs, descriptions D15 and D16 indicate IDs identifying respective print services (printers 1).

Referring back to FIG. 12, the HTTP client 11 sends data of the RSS to the RSS parser 12 (step S34). The RSS parser 12 conducts an RSS analysis process, and acquires the URL of the print data from each of the enclosure tags (step S35). After that, the RSS parser 12 conducts a link acquisition request to the print server 2 (step S36). FIG. 15 is a diagram showing an example of the link acquisition request by the HTTP request, according to the first embodiment of the present invention. For example, the link acquisition request includes a description D21 specifying the article (document), and a description D22 of the ID specifying the printer 1 itself (print service).

Referring back to FIG. 12, when the print server 2 receives the link acquisition request, the print server 1 generates the print data applicable to a state of the printer 1 being a request originator (step S37), and sends the generated print data to the printer 1 (step S38). FIG. 16 is a diagram showing an example of the print data according to the first embodiment of the present invention.

In FIG. 12, the print data are generated in response to the link acquisition request (step S36). Alternatively, the print data may be generated and accumulated in parallel to generating the RSS (step S32), so that it is possible to reduce a response time for the link acquisition request in a case in that it takes time to generate the print data.

Next, when the printer 1 receives the print data, the printer 1 conducts a print instruction by sending the printer data to the print process part 13 (step S39), and the print data are printed out by the printer engine 14 (step S40).

FIG. 17 is a sequence diagram showing a process example of generating the print data conducted in the step S37 in FIG. 12, according to the first embodiment of the present invention.

In FIG. 17, the HTTP server 21 of the print server 2 sends the URL included in the link acquisition request received from the printer 1, to the ID determination part 24 (step S41). The ID determination part 24 generates the SQL statement for acquiring the printer information by retrieving the ID from the URL (step S42). FIG. 18 is a diagram showing an example of the SQL statement generated by the ID determination part 24 according to the first embodiment of the present invention.

Referring back to FIG. 17, the ID determination part 24 issues the SQL to the printer DB 27 based on the SQL statement (step S43), and acquires the printer information (step S44). After that, the ID determination part 24 sends the acquired printer information and the URL to the data determination part 25 (step S45).

The data determination part 25 determines a print condition from the printer information and retrieves a document ID from the URL (step S46), and acquires data of a print document from the document DB 3 (steps S47 and S48).

Next, the data determination part 25 sends a print data generation instruction for generating pint data to the driver 26 corresponding to the type of the printer 1 which sent the link acquisition request (step S49). The driver 26 generates the print data (step S50), and returns the generated print data to the data determination part 25 (step S51). The data determination part 25 sends the print data to the HTTP server 21 (step S52), and the print data is sent to the printer 1.

As described above, the printer information for each of the printers 1 is registered to the print server 2 beforehand, and applicable print data are generated based on the printer information and provided to the printer 1 being the request originator. Therefore, it possible to prevent cases in that the print data cannot be printed out and expected print quality cannot be realized, due to different basic specifications and available options of the printers 1 and an unsuitable paper size of papers filled in a tray for the print data.

### [Second Embodiment]

FIG. 19 is a diagram showing a configuration example of a print system according to a second embodiment of the present invention. In FIG. 19, parts that are the same as those shown in the previously described figures in the first embodiment are given the same reference numbers. In the second embodiment, instead of registering printer information from the printers 1 to the print server 2, the print server 2 discovers the printers 1 through a network and the printer information is registered for each of the printers 1.

In FIG. 19, as a configuration of the print server 2, a discovery part 28 is additionally provided to discover the printers 1 being connected through the network, and others are the same as ones shown in FIG. 4 in the first embodiment. Also, each configuration of the printers 1 is the same as the configuration shown in FIG. 5 in the first embodiment.

FIG. 20 is a sequence diagram showing a process example of a printer registration by a discovery function according to the second embodiment of the present invention.

In FIG. 20, the print server 2 sends Probe data for a discovery by a multi-cast (step S61). FIG. 21 is a diagram showing an example data for conducting a Probe for the discovery according to the second embodiment of the present invention. In FIG. 21, the example data shows a description example by an SOAP (Simple Object Access Protocol) in accordance with a WS-Discovery (Web service Dynamic Discovery) method. A description D31 enclosed by a:Action tags indicates that the data are for the Probe, and a description D32 indicates a condition of a response subject.

Referring back to FIG. 20, when the printer 1 receives a request of the Probe, the printer 1 returns data indicating ProbeMatch when a requested condition matches with a condition of the printer 1 (step S62). FIG. 22 is a diagram showing an example of data indicating the ProbeMatch, according to the second embodiment of the present invention. For example, the data indicating the ProbeMatch includes a description D33 indicating an endpoint information of the print service.

Referring back to FIG. 20, the print server 2 sends a getmetadata for requesting acquiring metadata indicating the printer information, with respect to the printer 1 which sent the ProbeMatch (step S63). FIG. 23 is a diagram showing an example of a metadata acquisition request according to the second embodiment of the present invention. For example, the metadata acquisition request includes an extended description D34 since the metadata acquisition request is conducted to acquire the printer information.

Referring back to FIG. 20, when the printer 1 receives the getmetadata, the printer 1 sends the metadata indicating the printer information of the printer 1 itself (step S64). FIG. 24 is a diagram showing an example of a metadata acquisition response according to the second embodiment of the present invention. For example, the metadata acquisition response includes a description D35 indicating the printer information.

Referring back to FIG. 20, the print server 20 registers the received metadata to the printer DB 27 (step S65).

As described above, since a printer registration is started and conducted by the print server 2, the printer 1 is not required to begin the printer registration. Therefore, a control configuration of the printer 1 can be simplified.

### [Third Embodiment]

In a third embodiment, in order to correspond to a change of the state of the printer 1 at every second, the printer 1 periodically sends the print information to notify the change of the state of the printer 1 to the print server 2. For example, in a case in that a shortage of papers occurs for a specific paper size, it is determined by referring to the printer information being registered that the specific paper size is available. Thus, by periodically sending the printer information, it is possible to maintain the printer information indicating a latest state of the printer 1.

A system configuration and main operations in the third embodiment are the same as those in the first embodiment shown in FIG. 4 through FIG. 18. However, in the third embodiment, differently from the first embodiment, the printer registration shown in FIG. 6 is periodically processed.

FIG. 25 is a sequence diagram showing a process example in a case in that the printer 1 periodically sends the print information, according to the third embodiment of the present invention. In FIG. 25, the printer 1 conducts an initial printer registration with respect to the print server 2 (step S101). After that, the printer 1 updates the printer information by conducting the printer registration similar to the initial print registration with respect to the print server 2 at predetermined time intervals T (steps S102, S103, S104,...). It should be noted that a content of the printer information to be registered can be changed at the initial printer registration and the printer registration to update.

### [Fourth Embodiment]

In a fourth embodiment, in order to correspond to a change of a state of a printer 1 at every second, after an initial printer registration is conducted from the printer 1 to the print server 2, a print server 2 periodically acquires printer information from the printer 1. A so-called Pull type is formed for the print server 2 to pull information from the printer 1.

FIG. 26A is a diagram showing a configuration of the printer 1 according to a fourth embodiment of the present invention and FIG. 26B is a diagram showing a configuration of the print server 2 according to the fourth embodiment of the present invention. In FIG. 26A and FIG. 26B, parts that are the same as those shown in the previously described figures are given the same reference numbers. As shown in FIG. 26A, for example, an HTTP server 101 is additionally implemented in the printer 1 to receive an HTTP request from the print server 2 and returns an HTTP response to the print server 2: other parts are the same as those of the printer 1 shown in FIG. 5. As shown in FIG. 26B, an HTTP client 201 is additionally implemented in the print server 2 to access the printer 1 by HTTP: other parts are the same as those of the print server 2 shown in FIG. 4.

FIG. 27 is a sequence diagram showing a process example in a case in that the print server 2 periodically acquires the printer information according to the fourth embodiment of the present invention. In FIG. 27, first, the printer 1 conducts an initial printer registration with respect to the print server 2 (step S111). FIG. 28 is a diagram showing an example of data posted from the printer 1 to the print server 2, according to the fourth embodiment of the present invention. Different from the data shown in FIG. 7 in the first embodiment of the present invention, a description D101, which is enclosed by self tags and include an URL for acquiring the printer information of the printer 1, is newly added in the fourth embodiment.

Referring back to FIG. 27, after the initial printer registration is conducted from the printer 1 to the print server 2, the print server 2 periodically sends a request for acquiring the printer information to the printer 1 (steps S112, S114, S116,...), and acquires the printer information (steps S113, S115, S117,...).

FIG. 29 is a sequence diagram showing a process example of a printer information update in that the print server 2 acquires the printer information from the printer 2 in steps S112, S113,... shown in FIG. 27, according to the fourth embodiment of the present invention. In FIG. 29, the print server 2 sends a GET request of HTTP from the HTTP client 201 to the printer 1 (step S121). FIG. 30A is a diagram showing an example of a request to the printer 1, according to the fourth embodiment of the present invention and FIG. 30B is a diagram showing an example of a response from the printer 1, according to the fourth embodiment of the present invention. The print server 2 sends the GET request of HTTP as shown in FIG. 30A. When the printer 1 receives the GET request of HTTP, the printer 1 returns a response including a code "200 OK" indicating a successful process and the printer information as shown in FIG. 30B, to the print server 2. A header part of the response is slightly different from a header part shown in FIG. 28 but a body part is the same as a body part shown in FIG. 28.

Referring back to FIG. 29, when the HTTP client 201 of the print server 2 receives the response from the printer 1 (step S122), and the HTTP client 201 sends XML data included in received data to the printer registration part 22 (step S123).

The printer registration part 22 conducts the registration pre-process with respect to the XML data received from the HTTP client 201 (step S124). The registration pre-process is the same as shown in FIG. 8, and an SQL statement generated by the registration pre-process is the same as shown in FIG. 9.

Next, the printer registration part 22 issues an SQL to a printer DB 27 by executing the SQL statement (step S125), and the printer information is registered to the printer DB 27. The printer information is the same as shown in FIG. 10.

### [Fifth Embodiment]

In a fifth embodiment, in order to correspond to a change of a state of a printer 1 at every second, a print server 2 acquires the printer information from the printer 1 when a print is required (on demand). In the fifth embodiment, parts that are the same as those shown in the previously described figures in the first embodiment are given the same reference numbers.

A process by the printer 1 from acquiring an RSS from the print server 2 to printing out print data is the same as shown in FIG. 12. In the process, when the print server 2 generates the print data (step S37 in FIG. 12), the latest print information is acquired from the printer 1.

FIG. 31 is a sequence diagram showing a process example in a case of acquiring the printer information on demand, according to the fifth embodiment of the present invention. In FIG. 31, an HTTP server 21 of the print server 2 sends a URL included in a link acquisition request received from the printer 1, to an ID determination part 24 (step S131), and the ID determination part 24 generates an SQL statement for acquiring the printer information by retrieving an ID from the URL (step S132). A generated SQL statement is the same as shown in FIG. 18.

Next, the ID determination part 24 issues an SQL to the printer DB 27 by executing the generated SQL statement (step S134).

Subsequently, the ID determination part 24 sends a request for acquiring the printer information to the printer 1 (step S135), and acquires the latest printer information from the printer 1 (step S136). After that, the ID determination part 24 sends the acquired printer information and the URL to the data determination part 25 (step S137).

The data determination part 25 determines a print condition from the printer information, and also retrieves a document ID from the URL (step S138), and acquires data of a document to be printed out from a document DB 3 (steps S139 and S140).

Next, the data determination part 25 instructs a driver 26 corresponding to the type of the printer 1 to generate print data (step S141). Then, the driver 26 generates the print data (step S142), and returns the generated print data to the data determination part 25 (step S143). After that, the data determination part 25 sends the print data to the HTTP server 21 (step S144), and the HTTP server 21 sends the print data to the printer 1.

### [Sixth Embodiment]

In a sixth embodiment, a fixed portion in which information does not temporarily change, and a variable portion in which information is possible to be temporarily changed, can be sent separately or both together as the printer information from the printer 1. When a print server 2 acquires printer information from a printer 1 periodically or on demand, the print server 2 acquires both the.fixed portion and the variable portion at an initial print registration, and acquires the variable portion alone after the initial print registration. Therefore, communication traffic can be reduced. In the above explanations, simple printer information is shown. In practice, various items are included in the printer information and a considerably large amount of information is sent and received. In addition, since the considerably large amount of information is sent and received through a network for the number of the printers 1, it is meaningful to reduce an amount of communication data. In the sixth embodiment, parts that are the same as those shown in the previously described figures in the first embodiment are given the same reference numbers.

FIG. 32A and FIG. 32B are diagrams showing the printer information in a case in that the fixed portion and the variable portion can be sent separately or both together, according to the sixth embodiment of the present invention. In FIG. 32A, the printer information includes both the fixed portion and the variable portion for the initial printer registration. For example, a description D111 indicating an available paper size by paper-type-list tags corresponds to the variable portion, and a description D112 indicating a print range by margin tags corresponds to the fixed portion. In FIG. 32B, the printer information includes the variable portion alone for the print registrations after the initial print registration. For example, only a description D113 indicating the available paper size by paper-type-list tags corresponds to the variable portion.

FIG. 33 is a diagram showing a request in a case of individually requesting the fixed portion and the variable portion to correspond to the Pull type as shown in FIGS. 26A and 26B through FIGS. 30A and 30B and the on-demand type as shown in FIG. 31, according to the sixth embodiment of the present invention. FIG. 33 shows the request to be posted when the printer 1 conducts the initial printer registration to the print server 2. For example, the request includes a description D121 including a URL for acquiring the printer information of the fixed portion indicated by static tags, and a description D122 including a URL for acquiring the printer information of the variable portion indicated by dynamic tags. After the initial printer registration, when the print server 2 acquires the variable portion, the print server 2 can acquire the printer information of the variable portion by accessing the URL of the printer 1 included in the description D122. When the print server 2 also needs the printer information of the fixed portion, the print server 2 can also acquire the printer information of the fixed portion by accessing the URL of printer 1 included in the description D121.

### [Seventh Embodiment]

FIG. 34 is a diagram showing a configuration of a print system according to a seventh embodiment of the present invention. By including information concerning a form sheet printing lines, into metadata of printer information, a printer 1 (1-1; 1-2; 1-3) where the form sheet printing lines is available is instructed to print out by using text data alone included an RSS.

In FIG. 34, the configuration of a print server 2 in the seventh embodiment is the same as shown in FIG. 4 except for a DB connector 29 additionally implemented to interface with the business DB 4 for managing information of the form. Also, the configuration of printer 1 is the same as shown in FIG. 5.

FIG. 35 is a diagram showing a few forms according to the seventh embodiment of the present invention. A form 35a and a form 35b having different formats from each other are shown in FIG. 35.

FIG. 36 is a diagram showing contents of metadata to be registered to the print server 2 according to the seventh embodiment of the present invention. The metadata includes a description D41 concerning the form sheets available in printer 1.

FIG. 37 is a sequence diagram showing a process from acquiring the RSS to printing out print data, according to the seventh embodiment of the present invention. The process is conducted by operations in a state in that the form sheet printing out lines corresponding to a document to be printed out is available at the printer 1.

In FIG. 37, an HTTP client 11 of the printer 1 sends an RSS acquisition request to the print server 2 periodically or in response to an explicit instruction (step S71).

The print server 2 acquires form information from the business DB 4 through the DB connector 29 (steps S72 and S73). An RSS generation part 23 generates the RSS based on the acquired form information (step S74), and sends the generated RSS to the printer 1 (step S75).

Next, the HTTP client 11 sends data of the RSS to an RSS parser 12 (step S76). The RSS parser 12 conducts an RSS analysis process and acquires data to be printed onto the form sheet from various tags (step S77), and instructs a print process part 13 to print out print data by sending the print data (step S78). The print data are printed out by a printer engine 14 (step S79).

FIG. 38 is a flowchart for explaining a process for generating the RSS in the step S74 in FIG. 37, according to the seventh embodiment of the present invention.

In FIG. 38, first, a printer ID is retrieved form a request URL (step S81), and an SQL is issued to acquire the printer information corresponding to the printer ID (step S82).

Next, an available print range and available paper types are determined from a search result (step S83), and it is determined that a paper type of the form is included in the available paper types (step S84).

When paper type of the form is included in the available paper types (Yes in the step S84), the RSS including data acquired from the business DB 4 is generated (step S85), and the generated RSS is sent to the printer 1 (step S87). FIG. 39 is a diagram showing the generated RSS according to the seventh embodiment of the present invention. For example, the generated RSS includes a description D42 concerning data to be printed out to fill out items of an estimate sheet.

Referring back to FIG. 38, when the paper type of the form is not included in the available paper types (No in the step S84), the RSS is generated so as to attach links toward regular print data (step S86), and the generated RSS is sent to the printer 1 (step S87).

As described above, in the seventh embodiment, the metadata of the printer information includes information of the form sheet on which lines are printed out, and the printer 1 is instructed only by text data included in the RSS when the form sheet on which lines are printed out are available at the printer 1. Accordingly, it is possible to reduce workloads of generating the print data and a network.

The present invention is not limited to the specifically disclosed embodiments, and variations and modifications may be made without departing from the scope of the present invention as defined by the appended claims.

## Claims

1. A print system in which one or more printers (1) are connected to a print server (2) through a network, **characterized by**:
information acquisition means for acquiring printer information indicating a state of the printer (1) from each of the one or more printers (1) at an appropriate timing;
metadata generating means for generating and distributing metadata including biographical information of a document subject to be printed out at the printer (1) and data storage location information from the print server (2); and
print data generating means for generating and distributing applicable print data based on the print information corresponding to the printer (1) which sent a request when the request is received based on the metadata from the printer (1) to acquire the applicable print data of the document subject to be printed out.

2. A print system according to claim 1, when the information acquisition means is adapted to acquire the printer information by sending a registration request accompanying with the printer information from the printer (1) to the print server (2).

3. A print system according to claim 1 or 2, wherein the information acquisition means is arranged to acquire the printer information from the printer (1) which is discovered by the print server (2).

4. A print system according to claim 3, wherein the information acquisition means is arranged to acquire the printer information when a request is received from the printer (1) to acquire the applicable print data of the document subject to be printed out.

5. A print system according to claim 1, 2, 3 or 4 wherein the print server (2) is arranged to acquire the printer information from the printer (1) based on access destination information of the printer (1) included in a registration request sent from the printer (1) to the print server (2).

6. A print system according to any one of the preceding claims, wherein the information acquisition means is arranged to acquire the printer information at predetermined time intervals.

7. A print system according to any one of the preceding claims, wherein the information acquisition means is arranged to acquire, when the printer information is acquired at multiple times, the entire information at an initial time and variable information possible to be temporarily changed after the initial time.

8. A print system according to any one of the preceding claims, wherein the print data generating means are arranged to generate the applicable print data based on the printer information which is acquired from a printer DB (27) by corresponding to an ID identifying a print service included in a request of acquiring the applicable print data sent from the printer (1).

9. A print system according to any one of the preceding claims, wherein the print data generating means are arranged to generate the applicable print data by generating a driver corresponding to a type of the printer (1) being a request originator.

10. A print system according to any one of the preceding claims, wherein the print data generating means are arranged to generate the applicable print data based on document data acquired from an external document DB.

11. A print system according to any one of the preceding claims, wherein:
the printer information includes information of a form sheet on which lines are printed out;
when the metadata of the document subject to be printed out is requested from the printer (1) and the form sheet printing out lines is available with respect to the document subject to be printed out, the metadata generating means is arranged to include item data of the document in the metadata of the document; and
the printer (1) is arranged to print out the item data.

12. A print server to which one or more printers (1) can be connected through a network, said print server **characterized by**:
information acquisition means for acquiring printer information indicating a state of the printer (1) from each of the one or more printers (1) at an appropriate timing;
metadata generating means for generating metadata including biographical information of a document subject to be printed out at the printer (1) and data storage location and distributing the metadata to the print (1); and
print data generating means for generating and distributing applicable print data based on the print information corresponding to the printer (1) which sent a request when the request is received based on the metadata from the printer (1) to acquire the application print data fo the document subject to be printed out.

13. A print server as claimed in claim 12, further comprising:
an HTTP server for receiving an HTTP request from the printer (1) and sending an HTTP response to the printer (1);
printer registration means for conducting a registration process for printer information indicating a state of the printer (1);
RSS generation means for generating an RSS to be sent to the printer (1);
ID determination means for determining an ID identifying a print service included in a request URL when the applicable print data is requested from the printer (1) and acquiring the printer information;
data generation means for determining a print condition from the printer information and instructing generating of the applicable print data; and
a printer database (27) for storing the printer information.

14. A print server as claimed in claim 12 or 13, further comprising discovery means for conducting a discovery of the one or more printers (1) connected through the network.

15. A print server as claimed in claim 12, 13 or 14 further comprising a database connector (29) for interfacing to a business database (4) for managing information of forms.

16. A printer **characterized by**:
an HTTP client for sending an HTTP request to a print server (2) and receiving an HTTP response from the print server (2);
an RSS parser for analysing an RSS received from the print server (2);
print process means for controlling a print process of data acquired from the print server (2); and
printer engine including a mechanism formed by an imaging unit and a fixing unit.

17. A print control method in a print system in which one or more printers (1) are connected to a print server (2) through a network, **characterized by** the steps of:
acquiring printer information indicating a state of the printer (1) from each of the one or more printers (1) at an appropriate timing;
generating and distributing metadata including biographical information of a document subject to be printed out at the printer (1) and data storage location information from the print server (2); and
generating and distributing applicable print data based on the print information corresponding to the printer (1) which sent a request when the request is received based on the metadata from the printer (1) to acquire the application print data of the document subject to be printed out.
